# DEMANDE DE BREVET EUROPEEN

(11) **EP 1 703 670 A1**
(43) Date de publication de la demande: **20.09.2006**
(21) Numéro de dépôt: 06111139.9
(22) Date de dépôt: 14.03.2006
(51) Int. Cl.: H04L 12/24

(54) **Dispositif d'optimisation de modèles de configuration de cellules d'un réseau de communication radio**

(30) Priorité: 18.03.2005 FR 0550697
(71) Demandeur: ALCATEL, 75008 Paris (FR)
(72) Inventeur: Gonguet, Arnaud, 75013 Paris (FR); Delegue, Gérard, 94230 Cachan (FR); Betge-Brezetz, Stéphane, 75015 Paris (FR); Fournigault, Lionel M., 91190 Gif sur Yvette (FR)
(74) Mandataire: El Manouni, Josiane

(57) **Abrégé**

Un dispositif (D) est dédié à l'optimisation de modèles de configuration de cellules d'un réseau de communication radio (RC). Ce dispositif d'optimisation (D) comprend des moyens de traitement (MT) chargés i) d'analyser des données de configuration qui sont représentatives de chaque modéle utilisé pour configurer chaque cellule du réseau et d'éventùelfe(s) valeur(s) d'exception de paramètre(s) de configuration associée(s), afin de déterminer des données d'analyse qui sont représentatives, pour chaque modèle, de son taux d'utilisation en association à une valeur d'exception d'au moins un paramètre de configuration, et ii) de comparer les données d'analyse à des règles qui décrivent des optimisations de modèles en fonction de taux d'utilisation en association à au moins une valeur d'exception d'au moins un paramètre de configuration, afin de déterminer des optimisations de modèle(s).

## Description

L'invention concerne les réseaux de communication radio (ou cellulaires), et plus précisément l'optimisation des modèles (ou « templates ») qui sont utilisés pour configurer les cellules de tels réseaux.

On entend ici par « modèle de configuration » un ensemble constitué d'au moins un groupe de paramètres de configuration de cellules associés respectivement à des valeurs choisies.

Comme le sait l'homme de l'art, les réseaux d'accès radio de certains réseaux cellulaires (par exemple de type GSM ou UMTS) sont configurés en instaurant dans chacune de leurs cellules des valeurs choisies d'un groupe de paramètres de configuration. La plupart des cellules peuvent être configurées avec des groupes de paramètres de configuration qui dépendent de leur type. Par exemple, des cellules rurales sont généralement configurées avec un groupe de paramètres de configuration, tandis que des cellules urbaines sont généralement configurées avec un autre groupe de paramètres de configuration. C'est pourquoi, il est particulièrement avantageux de prédéfinir des modèles (ou templates) standards pour chaque type de cellule.

Plusieurs types d'environnements pouvant être rencontrés au sein d'un même type de cellules, on peut également prévoir plusieurs jeux de valeurs différentes pour certains groupes de paramètres de configuration, chaque jeu constituant alors un modèle standard particulier. Il est important de noter qu'une cellule peut être configurée par des valeurs de groupes de paramètres constituant plusieurs modèles de configuration standards dédiés à des aspects différents, comme par exemple la qualité de service (ou QoS) et les transferts entre cellules (ou « handovers »).

Il arrive cependant qu'aucun modèle standard prédéfini ne corresponde à la configuration désirée pour l'une des cellules. Cela résulte généralement d'une particularité locale perturbant les communications, comme par exemple une colline située dans une cellule rurale ou un immeuble de grandes dimensions situé dans une cellule urbaine. Lorsque l'on se trouve dans cette situation, il suffit généralement de changer la valeur d'un unique paramètre de configuration d'un modèle standard pour adapter la configuration de la cellule à son environnement. La cellule concernée est alors configurée avec le modèle standard et une valeur dite d'exception qui remplace la valeur inappropriée. Il est en effet préférable de réutiliser un modèle standard associé à une valeur d'exception plutôt que de définir un modèle standard supplémentaire, car plus le nombre de modèles standard est élevé, plus la tâche des optimisateurs de réseau est difficile.

L'utilisation systématique de valeurs d'exception induit au moins trois inconvénients.

Un premier inconvénient réside dans le fait qu'il n'est pas possible de reconfigurer plusieurs cellules avec un modèle standard associé à une même valeur d'exception. Dans une telle situation, il faut en effet reconfigurer les cellules les unes après les autres en associant à chaque fois la valeur d'exception au modèle standard.

Un deuxième inconvénient réside dans le fait que, dans l'hypothèse où une valeur de paramètre doit être remplacée par une valeur d'exception dans un grand nombre de cellules (voire même dans toutes), il n'existe pas de mécanisme automatisé de mise à jour permettant de reconfigurer chaque cellule concernée puisqu'il n'existe pas de nouveau modèle standard incluant ladite valeur d'exception en tant que valeur standard.

Un troisième inconvénient réside dans le fait qu'un modèle standard peut être moins utilisé lorsqu'il est associé à son jeu de valeurs standards que lorsqu'il est associé à son jeu de valeurs standards et à une certaine valeur d'exception. Dans cette situation, on peut considérer que le modèle standard est mal défini et donc de peu d'utilité pour l'optimisateur du réseau.

L'invention a donc pour but de remédier à tout ou partie des inconvénients précités.

Elle propose à cet effet un dispositif dédié à l'optimisation de modèles de configuration de cellules d'un réseau de communication radio.

Ce dispositif d'optimisation se caractérise par le fait qu'il comprend des moyens de traitement chargés :
- d'analyser des données de configuration qui sont représentatives de chaque modèle utilisé pour configurer chaque cellule du réseau et d'éventuelle(s) valeur(s) d'exception de paramètre(s) de configuration associée(s), afin de déterminer des données d'analyse qui sont représentatives, pour chaque modèle, de son taux d'utilisation en association à une valeur d'exception d'au moins un paramètre de configuration, et
- de comparer lés données d'analyse à des règles qui décrivent des optimisations de modèles en fonction de taux d'utilisation en association à au moins une valeur d'exception d'au moins un paramètre de configuration, afin de déterminer des optimisations de modèle(s).

Le dispositif d'optimisation selon l'invention peut comporter d'autres caractéristiques qui peuvent être prises séparément ou en combinaison, et notamment :
- ses moyens de traitement peuvent être chargés de déterminer à partir des données de configuration le nombre de cellules configurées avec un modèle et le nombre de cellules configurées avec ce modèle associé à une valeur d'exception, afin de déterminer le taux d'utilisation de chaque modèle en association à au moins une valeur d'exception. Dans ce cas, une fois que les moyens de traitement ont déterminé le nombre de cellules configurées avec un modèle, ils peuvent, avant de déterminer le taux d'utilisation correspondant, comparer ce nombre à un seuil afin de ne procéder à la détermination du taux d'utilisation qu'à condition que le nombre de cellules configurées avec ce modèle soit supérieur au seuil. On évite ainsi d'optimiser un modèle qui est très peu utilisé;
- ses moyens de traitement peuvent être chargés, lorsqu'ils reçoivent un accord relatif à une optimisation de modèle qu'ils ont déterminée, de stocker le modèle optimisé dans des premiers moyens de mémorisation dans lesquels sont stockées les données représentatives des modèles ;
- en variante, ses moyens de traitement peuvent être chargés de stocker automatiquement les données qui définissent certains au moins des modèles optimisés qu'ils ont déterminés dans des premiers moyens de mémorisation dans lesquels sont stockées les données représentatives des modèles ;
- il peut comprendre les premiers moyens de mémorisation ;
- lorsque les moyens de traitement viennent de stocker dans les premiers moyens de mémorisation les données représentatives d'un modèle optimisé, ils peuvent être chargés de mettre à jour les données de configuration afin qu'elles soient homogènes avec les données représentatives du modèle optimisé ;
- certaines au moins des règles peuvent être de type « condition/action ». Dans ce cas, certaines au moins des conditions peuvent par exemple porter sur une valeur seuil de taux d'utilisation ;
- ses moyens de traitement peuvent être chargés de procéder à la détermination d'une nouvelle optimisation d'un modèle lorsque la durée qui s'est écoulée depuis la dernière optimisation de ce modèle est supérieure à une durée-seuil choisie. Dans ce cas, les moyens de traitement peuvent par exemple stocker des données représentatives de chaque optimisation de modèle en correspondance d'une date d'optimisation et déterminer la durée écoulée depuis la dernière optimisation d'un modèle en comparant la date courante à la date stockée de la dernière optimisation de ce modèle ;
- ses moyens de traitement peuvent être chargés de procéder à la détermination d'une nouvelle optimisation d'un modèle lorsque le taux de remplacement de ce modèle par un modèle optimisé est supérieur à un taux-seuil choisi ;
- il peut comprendre des seconds moyens de mémorisation dans lesquels sont stockées les données de configuration des cellules du réseau.

L'invention propose également un système de gestion de réseau de communication radio, par exemple de type NMS (pour « Network Management System »), ou un système de gestion de services d'un réseau de communication radio, par exemple de type OSS (pour « Operation Support System »), équipé d'un dispositif d'optimisation du type de celui présenté ci-avant.

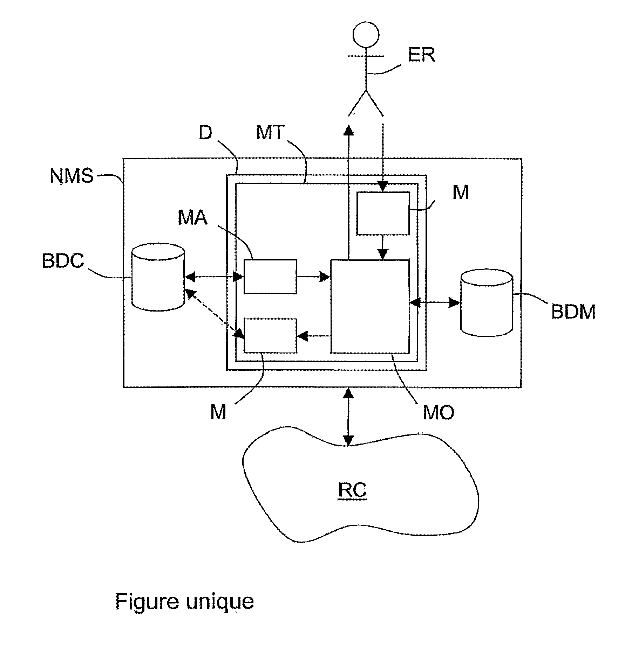

D'autres caractéristiques et avantages de l'invention apparaîtront à l'examen de la description détaillée ci-après, et du dessin annexé, sur lequel l'unique figure illustre de façon très schématique et fonctionnelle un exemple de réalisation d'un dispositif de gestion selon l'invention, implanté dans un système de gestion de réseau. Le dessin annexé pourra non seulement servir à compléter l'invention, mais aussi contribuer à sa définition, le cas échéant.

L'invention a pour objet de permettre l'optimisation automatisée de modèles (ou « templates ») de configuration de cellules d'un réseau de communication radio (ou cellulaire).

Dans ce qui suit, on considère à titre d'exemple non limitatif que le réseau cellulaire est de type GMS. Mais, l'invention n'est pas limitée à ce type de réseau cellulaire. Elle concerne en effet tout type de réseau de communication radio dans lequel le réseau d'accès radio comporte des cellules pouvant être configurées par des valeurs de paramètres de configuration, et notamment les réseaux de type UMTS ou GPRS/EDGE, ainsi que tous leurs équivalents.

L'invention ne portant ni sur le fonctionnement d'un réseau cellulaire ni sur la configuration de ce dernier, son fonctionnement et sa configuration ne seront pas décrits ci-après. Il est simplement rappelé que les cellules d'un réseau cellulaire (ou radio) peuvent être configurées au moyen d'un (ou plusieurs) jeu(x) de valeurs de groupe(s) de paramètres de configuration qui constitue(nt) (chacun) un modèle de configuration prédéterminé. Une cellule peut en effet être configurée par des jeux de valeurs de groupes de paramètres constituant plusieurs modèles de configuration standards dédiés à des aspects différents, comme par exemple la qualité de service (ou QoS) et les transferts entre cellules (ou « handovers »).

Cette configuration peut être contrôlée par un système de gestion de réseau, par exemple de type NMS (pour « Network Management System »). Cela peut notamment être le cas lorsque le réseau n'est associé qu'à un unique type de service, comme par exemple la voix dans le cas d'un réseau GSM. Dans ce cas, chaque cellule est configurée au moyen d'au moins un jeu de valeurs de paramètres de configuration. En variante, la configuration peut être contrôlée par un système de gestion de services du réseau, par exemple de type OSS (pour « Opération Support System »). Cela peut notamment être le cas lorsque le réseau est associé à plusieurs types de service, comme par exemple la voix, la vidéo et les données (ou « data ») dans le cas d'un réseau UMTS. Dans ce dernier cas, certaines cellules peuvent disposer d'au moins un jeu de valeurs de paramètres de configuration pour chaque type de service qu'elle assure.

Afin de permettre l'optimisation automatisée de modèles de configuration des cellules d'un réseau radio RC, l'invention propose un dispositif d'optimisation D du type de celui illustré sur l'unique figure, à titre d'exemple non limitatif.

Comme cela est illustré sur l'unique figure, un tel dispositif d'optimisation D peut être intégré dans un système de gestion de réseau NMS. Mais, le dispositif d'optimisation D pourrait être raccordé au système de gestion de réseau NMS. Il pourrait être également intégré dans un système de gestion de services du réseau de type OSS ou bien raccordé à ce dernier.

Le dispositif d'optimisation D, selon l'invention, comprend essentiellement un module de traitement MT qui, comme cela est illustré et comme on le verra plus loin, peut être éventuellement subdivisé, de façon fonctionnelle, en plusieurs modules.

Ce module de traitement MT est tout d'abord chargé d'analyser des données de configuration qui sont représentatives, d'une part, de chaque modèle utilisé par le réseau RC pour configurer chacune des cellules de son réseau d'accès radio, et d'autre part, de l'éventuelle (ou des éventuelles) valeur(s) d'exception de paramètre(s) de configuration associée(s) au modèle, Ces données de configuration sont stockées dans un module de mémorisation de configurations BDC, qui est par exemple réalisé sous la forme d'une base de données de configuration ou de tout autre moyen de stockage. Comme cela est illustré sur l'unique figure, le module de mémorisation de configurations BDC peut faire partie du système de gestion de réseau NMS. Mais, dans une variante on pourrait éventuellement intégrer le module de mémorisation de configurations BDC dans le dispositif d'optimisation D.

Cette analyse des données de configuration est destinée à déterminer des données d'analyse représentant le taux d'utilisation de chaque modèle en association à une valeur d'exception de l'un au moins de ses paramètres de configuration. En d'autres termes, l'analyse vise par exemple à déterminer pour chaque modèle standard, parmi les données de configuration qui sont stockées dans le module de mémorisation de configurations BDC, le nombre de cellules configurées avec ce modèle standard et le nombre de cellules configurées avec ce modèle standard associé à une valeur d'exception, puis à déterminer le taux d'utilisation de chaque modèle standard en association à au moins une valeur d'exception.

Par exemple, cette analyse (de type statistique) peut montrer que dans 15% des cas un modèle standard M1 est utilisé en association à la valeur d'exception V1 du paramètre de configuration P3. Cette analyse peut également montrer, par exemple, que dans 95% des cas un modèle standard, M2 est utilisé en association à au moins une valeur d'exception d'un paramètre de configuration P2. Ces exemples de résultats d'analyse constituent ce que l'on appelle ci-après des données d'analyse.

La détermination du taux d'utilisation d'un modèle en association à une valeur d'exception peut ne pas être systématique. On peut en effet envisager que le module de traitement MT soit chargé, une fois qu'il a déterminé le nombre de cellules configurées avec un modèle et avant de déterminer le taux d'utilisation correspondant, de comparer ce nombre à un seuil choisi, et de ne procéder à la détermination du taux d'utilisation qu'à condition que le nombre de cellules configurées avec ce modèle soit supérieur au seuil. Cette opération de comparaison complémentaire permet d'éviter l'optimisation des modèles qui sont très peu utilisés.

La fonction d'analyse décrite ci-avant peut, comme illustré sur l'unique figure, être assurée par un module d'analyse MA du module de traitement MT.

Une fois l'analyse terminée pour un, plusieurs ou tous les modèles (de configuration) standards utilisés au sein du réseau RC, le module de traitement MT compare les données d'analyse à des règles qui décrivent chacune une optimisation de modèle en fonction d'un taux d'utilisation en association à au moins une valeur d'exception d'au moins un paramètre de configuration.

Ces règles sont conçues par un expert ER. Elles sont fournies au dispositif d'optimisation D par l'intermédiaire d'une interface MD qu'il comprend préférentiellement.

Les règles sont de préférence de type « condition/action », c'est-à-dire « si une condition est satisfaite (ou remplie) alors une action d'optimisation peut être effectuée ». Par « action d'optimisation » on entend ici une proposition de création d'un nouveau modèle de configuration standard résultant du remplacement dans un modèle de configuration standard d'une valeur d'un paramètre de configuration par une autre valeur, précédemment considérée comme une valeur d'exception.

Par exemple, une règle se présente sous la forme : « si un modèle de configuration standard est utilisé en association à une valeur d'exception d'un paramètre de configuration dans 10% des cas, alors un nouveau modèle de configuration standard peut être créé avec cette valeur d'exception ». Cette règle indique qu'en raison de l'utilisation relativement fréquente d'une valeur d'exception avec un modèle standard il est avantageux de créer un nouveau modèle de configuration standard additionnel. Une autre règle peut par exemple se présenter sous la forme : « si un modèle de configuration standard est utilisé en association à au moins une valeur d'exception d'un paramètre de configuration dans 90% des cas, alors ce modèle de configuration standard peut être remplacé par un nouveau modèle de configuration standard incorporant cette valeur d'exception ». Cette règle indique qu'en raison de l'utilisation quasi systématique d'une valeur d'exception avec un modèle de configuration standard il est avantageux de remplacer ce modèle de configuration standard par un nouveau modèle de configuration standard incorporant la valeur d'exception,

Chaque pourcentage représente ici un taux-seuil qui peut être modifié par l'expert ER en fonction des besoins, par exemple via l'interface MD. Bien entendu, on peut utiliser d'autres types de règles dans lesquelles les conditions peuvent porter, par exemple, sur une appartenance à un intervalle défini par deux valeurs seuil de taux d'utilisation.

Les règles sont donc utilisées par le module de traitement MT pour déterminer (par comparaison(s) de seuil(s)) si des optimisations de modèle(s) peuvent être envisagées.

Chaque fois que le module de traitement MT détecte qu'une optimisation peut être envisagée, il génère à destination de l'expert ER un message décrivant la proposition d'optimisation. Si la proposition d'optimisation est acceptée par l'expert ER, le module de traitement MT en est averti par exemple via l'interface MD. Il crée alors un nouveau modèle de configuration standard en remplaçant dans le modèle de configuration standard, objet de l'optimisation, la valeur du paramètre de configuration concerné par la valeur d'exception associée. Ce nouveau modèle de configuration standard peut alors soit être ajouté à l'ensemble des modèles de configuration standards, soit remplacer dans l'ensemble des modèles de configuration standards le modèle de configuration standard dont il est issu.

Pour ce faire, le module de traitement MT utilise les données qui définissent les modèles de configuration standards. Ces données de modèles sont stockées dans un module de mémorisation de modèles BDM, qui est par exemple réalisé sous la forme d'une base de données de modèles ou de tout autre moyen de stockage. Comme cela est illustré sur l'unique figure, le module de mémorisation de modèles BDM peut faire partie du système de gestion de réseau NMS. Mais, il pourrait également faire partie du dispositif d'optimisation D.

On peut également et éventuellement envisager que le module de traitement MT soit chargé de créer automatiquement un nouveau modèle de configuration standard chaque fois qu'il a déterminé une proposition d'optimisation, sans qu'il ait besoin de l'autorisation de l'expert ER, puis qu'il procède à son intégration dans le module de mémorisation de modèles BDM ou bien au remplacement dans le module de mémorisation de modèles BDM du modèle de configuration standard (quasiment) inutilisé par le nouveau modèle de configuration standard.

Les fonctions de détermination de propositions d'optimisation de modèle et de création de nouveaux modèles de configuration standards, décrites ci-avant, peuvent, comme illustré sur l'unique figure, être assurées par un module d'optimisation MO du module de traitement MT.

Préférentiellement, le module de traitement MT est également chargé, chaque fois qu'il a stocké dans le module de mémorisation de modèles BDM des données représentatives d'un nouveau modèle standard intégrant une valeur d'exception, de procéder à la mise à jour du module de mémorisation de configurations BDC, Pour ce faire, le module de traitement MT peut par exemple rechercher dans le module de mémorisation de configurations BDC toutes les cellules dont les identifiants étaient jusqu'alors stockés en correspondance de l'identifiant de « l'ancien » modèle standard associé à cette valeur d'exception. Puis, il remplace l'identifiant de chaque ancien modèle standard (associé à la valeur d'exception concernée) par l'identifiant du nouveau modèle qui intègre cette valeur d'exception,

Cette mise à jour est destinée à rendre cohérentes les données de configuration qui sont stockées dans le module de mémorisation de configurations BDC avec celles qui sont stockées dans le module de mémorisation de modèles BDM.

La fonction de mise à jour décrite ci-avant peut, comme illustré sur l'unique figure, être assurée par un module de reconfiguration MR du module de traitement MT.

Les configurations de certaines cellules pouvant être modifiées fréquemment, le module de traitement MT peut fréquemment faire des propositions d'optimisation, ce qui peut entraîner une certaine instabilité du système. Pour éviter ce type d'instabilité, il est avantageux, que le module de traitement MT (par exemple son module d'optimisation MO) mette en oeuvre un mécanisme de contrôle.

Ce mécanisme de contrôle peut par exemple consister à n'autoriser la détermination d'une nouvelle optimisation d'un modèle standard qu'à condition que la durée qui s'est écoulée depuis la dernière optimisation de ce modèle standard soit supérieure à une durée-seuil choisie.

Pour ce faire, le module de traitement MT (par exemple son module d'optimisation MO) peut par exemple stocker dans une mémoire l'historique des optimisations de chaque modèle standard. A cet effet, chaque fois qu'il détermine une proposition d'optimisation pour un modèle standard donné, il stocke dans la mémoire des données représentant l'identifiant de ce modèle standard en correspondance de données représentant sa date d'optimisation. Ainsi, lorsque le module de traitement MT souhaite procéder à une nouvelle optimisation d'un modèle standard, il détermine dans la mémoire la date de la dernière optimisation de ce modèle standard, puis compare cette date à la date courante afin de calculer la durée qui s'est écoulée depuis la dernière optimisation. Puis, le module de traitement MT compare cette durée écoulée à la durée seuil et procède à la nouvelle optimisation si la durée écoulée est supérieure à la durée-seuil.

En variante, le mécanisme de contrôle peut par exemple consister à n'autoriser la détermination d'une nouvelle optimisation d'un modèle standard qu'à condition que le taux de remplacement de ce modèle standard par un modèle standard optimisé soit supérieur à un taux-seuil choisi.

En présence d'un modèle standard M1 présentant un taux d'utilisation égal à celui de ce même modèle standard associé à une valeur d'exception M1', on risque de transformer M1 en M1' puis M1' en M1 en boucle. Par conséquent, on peut prévoir des règles auxiliaires évitant qu'une telle situation ne se produise. Une telle règle auxiliaire peut par exemple se présenter sous la forme: « le taux d'échange d'un modèle standard par un nouveau modèle standard ne doit pas être égal à 50% ». Dans ce cas, en présence d'une équiprobabilité on ne procède pas au remplacement de M1 par M1' ou inversement.

Le dispositif d'optimisation D selon l'invention, et notamment son module de traitement MT et ses éventuels module de mémorisation de configurations BDC et module de mémorisation de modèles BDM, peuvent être réalisés sous la forme de circuits électroniques, de modules logiciels (ou informatiques), ou d'une combinaison de circuits et de logiciels.

L'invention est particulièrement avantageuse dans la mesure où elle permet d'assurer qu'un modèle de configuration standard correspond toujours au besoin de configuration du réseau le plus probable. En outre, le nombre de modèles de configuration standards étant minimisé, il est plus facile de les choisir et d'instaurer dans le réseau les jeux de valeurs des groupes de paramètres de configuration qui les constituent.

L'invention ne se limite pas aux modes de réalisation de dispositif d'optimisation et de système de gestion de réseau décrits ci-avant, seulement à titre d'exemple, mais elle englobe toutes les variantes que pourra envisager l'homme de l'art dans le cadre des revendications ci-après.

## Revendications

1. Dispositif (D) d'optimisation de modèles de configuration de cellules d'un réseau de communication radio (RC), chaque modèle étant constitué d'au moins un groupe de paramètres, de configuration de cellules associés respectivement à des valeurs choisies, **caractérisé en ce qu'**il comprend des moyens de traitement (MT) agencés i) pour analyser des données de configuration, représentatives de chaque modèle utilisé pour configurer chaque cellule dudit réseau (RC) et d'éventuelle(s) valeur(s) d'exception de paramètre(s) de configuration associée(s), de manière à déterminer des données d'analyse représentatives pour chaque modèle d'un taux d'utilisation en association à une valeur d'exception d'au moins un paramètre de configuration, et ii) pour comparer lesdites données d'analyse à des règles décrivant des optimisations de modèles en fonction de taux d'utilisation en association à au moins une valeur d'exception d'au moins un paramètre de configuration, de manière à déterminer des optimisations de modèle(s).

2. Dispositif selon la revendication 1, **caractérisé en ce que** lesdits moyens de traitement (MT) sont agencés pour déterminer à partir desdites données de configuration le nombre de cellules configurées avec un modèle et le nombre de cellules configurées avec ce modèle associé à une valeur d'exception, de manière à déterminer ledit taux d'utilisation de chaque modèle en association à au moins une valeur d'exception.

3. Dispositif selon la revendication 2, **caractérisé en ce que** lesdits moyens de traitement (MT) sont agencés, une fois qu'ils ont déterminé un nombre de cellules configurées avec un modèle et avant de déterminer le taux d'utilisation correspondant, pour comparer ce nombre à un seuil choisi afin de procéder à la détermination dudit taux d'utilisation lorsque ledit nombre de cellules configurées avec ce modèle est supérieur audit seuil choisi.

4. Dispositif selon l'une des revendications 1 à 3, **caractérisé en ce que** lesdits moyens de traitement (MT) sont agencés, en cas de réception d'un accord relatif à une optimisation de modèle déterminée, pour stocker ledit modèle optimisé dans des premiers moyens de mémorisation (BDM) dans lesquels sont stockées les données représentatives desdits modèles.

5. Dispositif selon l'une des revendications 1 à 3, **caractérisé en ce que** lesdits moyens de traitement (MT) sont agencés pour stocker les données définissant certains au moins des modèles optimisés dans des premiers moyens de mémorisation (BDM) dans lesquels sont stockées les données représentatives desdits modèles.

6. Dispositif selon l'une des revendications 4 et 5, **caractérisé en ce qu'**il comprend lesdits premiers moyens de mémorisation (BDM).

7. Dispositif selon l'une des revendications 4 à 6, **caractérisé en ce que** lesdits moyens de traitement (MT) sont agencés, en cas de stockage de données représentatives d'un modèle optimisé dans lesdits premiers moyens de mémorisation (BDM), pour mettre à jour lesdites données de configuration de sorte qu'elles soient homogènes avec lesdites données représentatives du modèle optimisé.

8. Dispositif selon l'une des revendications 1 à 7, **caractérisé en ce que** certaines au moins desdites règles sont des règles de type « condition/action ».

9. Dispositif selon la revendication 8, **caractérisé en ce que** certaines au moins desdites conditions portent sur une valeur seuil de taux d'utilisation.

10. Dispositif selon l'une des revendications 1 à 9, **caractérisé en ce que** lesdits moyens de traitement (MT) sont agencés pour procéder à la détermination d'une nouvelle optimisation d'un modèle lorsque la durée écoulée depuis la dernière optimisation de ce modèle est supérieure à une durée-seuil choisie.

11. Dispositif selon la revendication 10, **caractérisé en ce que** lesdits moyens de traitement (MT) sont agencés pour stocker des données représentatives de chaque optimisation de modèle en correspondance d'une date d'optimisation et pour déterminer ladite durée écoulée depuis la dernière optimisation d'un modèle en comparant la date courante à la date stockée de la dernière optimisation dudit modèle.

12. Dispositif selon l'une des revendications 1 à 11, **caractérisé en ce que** lesdits moyens de traitement (MT) sont agencés pour procéder à la détermination d'une nouvelle optimisation d'un modèle lorsque le taux de remplacement dudit modèle par un modèle optimisé est supérieur à un taux-seuil choisi.

13. Dispositif selon l'une des revendications 1 à 12, **caractérisé en ce qu'**il comprend des seconds moyens de mémorisation (BDC) dans lesquels sont stockées lesdites données de configuration des cellules du réseau (RC).

14. Système (NMS) de gestion de réseau de communication radio (RC), **caractérisé en ce qu'**il comprend un dispositif d'optimisation (D) selon l'une des revendications précédentes.

15. Système (OSS) de gestion de services d'un réseau de communication radio (RC), **caractérisé en ce qu'**il comprend un dispositif d'optimisation (D) selon l'une des revendications 1 à 13.
